# FASCICULE DE BREVET EUROPEEN

(11) **EP 3 032 249 B1**
(45) Date de publication et mention de la délivrance du brevet: **22.07.2020**
(21) Numéro de dépôt: 15196919.3
(22) Date de dépôt: 30.11.2015
(51) Int. Cl.: G01N 27/414, H01L 29/778

(54) **CAPTEUR DE DÉTECTION D'UN COMPOSANT D'UN GAZ**
SENSOR ZUM ERFASSEN EINER GASKOMPONENTE
SENSOR FOR DETECTING A COMPONENT OF A GAS

(30) Priorité: 11.12.2014 FR 1462278
(43) Date de publication de la demande: 15.06.2016
(73) Titulaire: PSA Automobiles SA, 78300 Poissy (FR); Centre National de la Recherche Scientifique, 75016 Paris (FR); Georgia Tech Lorraine, 57070 Metz (FR)
(72) Inventeur: PRADERE, LAETITIA, 91570 BIEVRES (FR); HALFAYA, YACINE, 57070 METZ (FR); OUGAZZADEN, Abdallah, 51156 Marly (FR); VOSS, PAUL, 57000 Metz (FR); SALVESTRINI, Jean-Paul, 57070 Metz (FR); BISHOP, Chris, 57000 Metz (FR)

(56) Documents cités:
- WO-A1-2007/017252
- DE-A1- 10 032 062
- US-A1- 2009 315 075
- C.-C. HUANG ET AL: "Characteristics of a Pd/AlGaN/GaN Transistor Processed Using the Sensitization, Activation, and Electroless Plating (EP) Approaches", JOURNAL OF THE ELECTROCHEMICAL SOCIETY, vol. 159, no. 11, 31 août 2012 (2012-08-31), pages D637-D641, XP055204905, ISSN: 0013-4651, DOI: 10.1149/2.008211jes
- SCHALWIG J ET AL: "Gas sensitive GaN/AlGaN-heterostructures", SENSORS AND ACTUATORS B: CHEMICAL: INTERNATIONAL JOURNAL DEVOTED TO RESEARCH AND DEVELOPMENT OF PHYSICAL AND CHEMICAL TRANSDUCERS, ELSEVIER S.A, CH, vol. 87, no. 3, 20 décembre 2002 (2002-12-20), pages 425-430, XP004393684, ISSN: 0925-4005, DOI: 10.1016/S0925-4005(02)00292-7
- SALVESTRINI J P ET AL: "Tuning of internal gain, dark current and cutoff wavelength of UV photodetectors using quasi-alloy of BGaN-GaN and BGaN-AlN superlattices", QUANTUM SENSING AND NANOPHOTONIC DEVICES IX, SPIE, 1000 20TH ST. BELLINGHAM WA 98225-6705 USA, vol. 8268, no. 1, 21 janvier 2012 (2012-01-21), pages 1-10, XP060000813, DOI: 10.1117/12.914800
- RAVINDRAN VINOD ET AL: "Dual-purpose BGaN layers on performance of nitride-based high electron mobility transistors", APPLIED PHYSICS LETTERS, AMERICAN INSTITUTE OF PHYSICS, US, vol. 100, no. 24, 11 juin 2012 (2012-06-11), pages 243503-243503, XP012156588, ISSN: 0003-6951, DOI: 10.1063/1.4729154 [extrait le 2012-06-13]

## Description

L'invention a trait au domaine des lignes d'échappement des véhicules automobiles.

Les véhicules automobiles équipés d'un moteur thermique, qu'il fonctionne avec de l'essence ou du gasoil, comprennent une ligne d'échappement par laquelle les gaz d'échappement, issus de la combustion du carburant dans le moteur, sont rejetés dans l'atmosphère.

Ces gaz d'échappement contiennent certains éléments chimiques, notamment des oxydes d'azote, dont les émissions sont soumises à des réglementations.

Depuis de nombreuses années, un effort est fait par les constructeurs afin de traiter les gaz d'échappement des véhicules.

Une première série de mesures consiste en la réduction du poids des véhicules et l'amélioration de leur aérodynamisme, et par conséquence, en la réduction de la consommation de carburant des véhicules et la réduction de la quantité de gaz d'échappement.

Une deuxième série de mesures consiste en l'intégration d'un système de dépollution. Par exemple, les systèmes SCR (acronyme de l'anglais Selective Catalytic Reduction ou Réduction Catalytique Sélective en français), comprennent une sonde placée dans la ligne d'échappement, afin de calculer une quantité d'un additif (en particulier NH₃) permettant de réduire les émissions d'oxydes d'azote (NOx).

Les capteurs NOx actuellement utilisés pour les gaz des échappements automobiles mesurent une concentration globale d'oxydes d'azote (NO2, NO, N2O), sans pouvoir distinguer chaque composant en particulier. Les temps de réponse de ces capteurs NOx sont élevés et ces capteurs sont relativement onéreux.

DE 100 32 062 A1 et les articles de C-C HUANG ET AL: "Characteristics of a Pd/AlGaN/GaN Transistor Processed Using the Sensitization, Activation, and Electroless Plating (EP) Approaches", Journal of The Electrochemical Society, vol. 159, no. 11 et J. SCHALWIG ET AL: "Gas sensitive GaN/AlGaN-heterostructures", Sensors and Actuators B, vol. 87, no. 3*,* divulguent des capteurs de gaz de type HEMT.

Un objectif est de proposer un capteur sélectif à différentes espèces gazeuses, et permettant d'analyser plus finement la composition d'un gaz d'échappement de véhicule automobile.

Avantageusement, ce capteur est sensible, peu coûteux et résistant, notamment à la chaleur.

Un autre objectif est de proposer un véhicule automobile comprenant une ligne d'échappement équipée d'un capteur répondant à l'objectif précédent.

A ces fins, il est proposé, selon un premier aspect, un capteur pour la détection d'une espèce chimique dans un gaz d'une ligne d'échappement d'un moteur thermique, notamment de véhicule automobile, selon l'énoncé de la revendication indépendante 1.

De préférence, ce capteur est un détecteur d'au moins un des gaz suivants : NO, NO2, NH₃, CO, CO₂.

Selon diverses réalisations, le capteur présent les caractères suivants, le cas échéant combinés :
le transistor est un transistor à haute mobilité électronique HEMT ;
la deuxième couche barrière étant réalisée à base d'un alliage ternaire AlxGa1-xN, x étant avantageusement compris entre 0.15 et 0.4, la première couche est à base de nitrure de galium ;
la deuxième couche barrière présente un gradient d'épaisseur ;
la grille est réalisée à base d'un alliage ternaire ByGa1-yN ;
le substrat du transistor est réalisé en carbure de silicium ou en oxyde d'aluminium ;
la deuxième couche barrière a une épaisseur comprise entre 5 et 30nm, et plus particulièrement entre 20 et 30nm ;
la couche fonctionnelle est réalisée en platine et/ou en palladium, la couche fonctionnelle étant continue ou discontinue ;
le transistor comprend une troisième couche et une quatrième couche toutes deux situées entre la première couche et la deuxième couche barrière, la troisième couche et la quatrième couche étant composées de nitrure de galium (GaN).

Il est proposé, selon un deuxième aspect, une ligne d'échappement de moteur thermique, notamment de véhicule automobile, comprenant au moins un capteur tel que présenté ci-dessus. Il s'est avéré que le capteur de l'invention était apte à détecter très précisément des espèces gazeuses présentes dans les gaz d'échappement comme les NO_{X} (NO et NO₂), les COₓ (CO et le CO₂) et le NH₃. Il s'est également avéré qu'il était capable de maintenir son niveau de précision de détection même aux températures pouvant aller jusqu'à 600°C qui peuvent être atteintes par les gaz d'échappement, ce qui est exceptionnel. A noter également que le capteur selon l'invention permet de détecter et mesurer les teneurs en différents composés gazeux mentionnée plus haut, en étant remarquablement compact : il est constitué par un seul dispositif à implanter dans la ligne d'échappement.

La mesure des NOx et des COx est utile pour suivre l'efficacité des organes de dépollution intégrés à la ligne d'échappement et visant à en réduire la quantité dans les gaz d'échappement. La mesure de NH₃ est également utile, puisque c'est un réactif utilisé par les organes de dépollution pour réduire les NOx. La mesure de sa teneur sur ligne est utile pour suivre la réduction des NOx et pour éventuellement déclencher un traitement d'un éventuel excès de NH₃ en bout de ligne.

Il est proposé, selon un troisième aspect, un véhicule automobile comprenant une ligne d'échappement telle que présentée ci-dessus.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile comprenant une ligne d'échappement ;
- la figure 2 est une vue schématique de la ligne d'échappement de la figure 1, cette ligne comprenant un capteur de détection et de mesure d'un composant du gaz d'échappement;
- la figure 3 est une vue schématique du capteur de détection et de mesure de la figure 2 ;
- la figure 4 est une vue en coupe d'un transistor équipant le capteur de la figure 3.

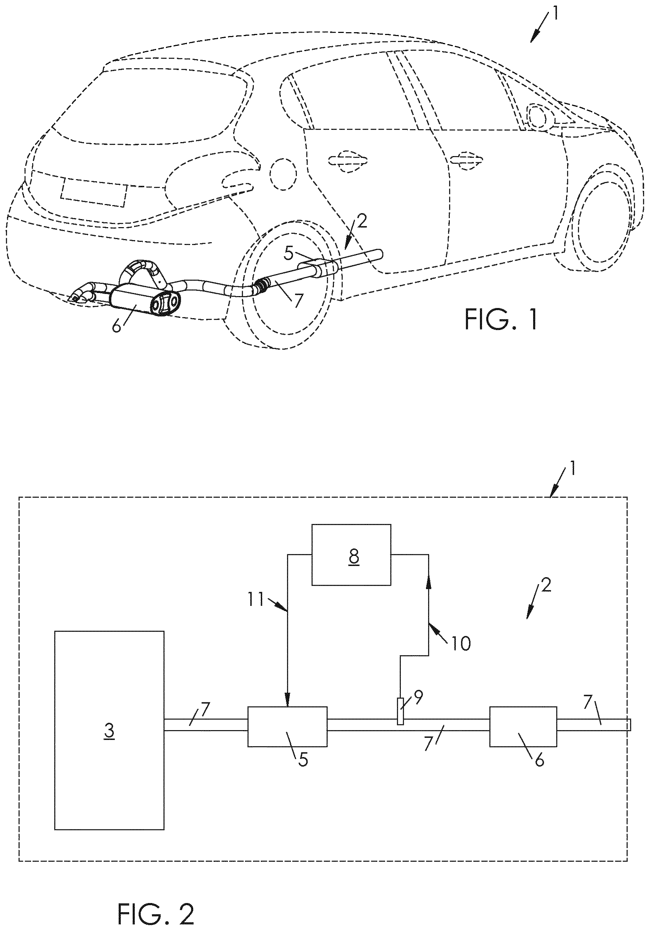

Sur la figure 1 est représenté un véhicule 1 automobile comprenant une ligne 2 d'échappement. Par ligne 2 d'échappement, on entend un conduit placé en sortie d'un moteur 3 à combustion interne (encore appelé moteur thermique) du véhicule 1 qui permet d'évacuer les gaz d'échappement issus de la combustion interne du moteur 3.

Comme on le voit sur la figure 1 et sur la vue schématique de la figure 2, la ligne 2 d'échappement comprend, de manière connue en soit, un SCR 5, ainsi qu'un filtre à particules (non représenté).

La ligne 2 d'échappement comprend également un silencieux 6 permettant de réduire le bruit en sortie de la ligne 2 d'échappement, et une tubulure 7 assurant la liaison entre le moteur 3 et le SCR 5, puis entre le SCR 5 et le silencieux 6 et enfin prolongeant le silencieux 6 pour permettre le rejet dans l'environnement du gaz d'échappement filtré.

Un additif, tel que de l'ammoniac (NH3), est injecté dans le SCR 5 afin de neutraliser les oxydes d'azote (NOx). Un calculateur 8 relié à un capteur 9 placé en aval du SCR 5, détermine la quantité d'additif à injecter dans le SCR 5.

Le capteur 9 détecte et mesure la quantité de NO et/ou de NO2 dans le gaz d'échappement puis transmet un signal 10 de sortie au calculateur 8 qui, en réalisant le calcul du rapport NO/NO2, détermine la quantité de NH3 à injecter dans le SCR 5 et envoie au SCR 5 une consigne 11 d'injection.

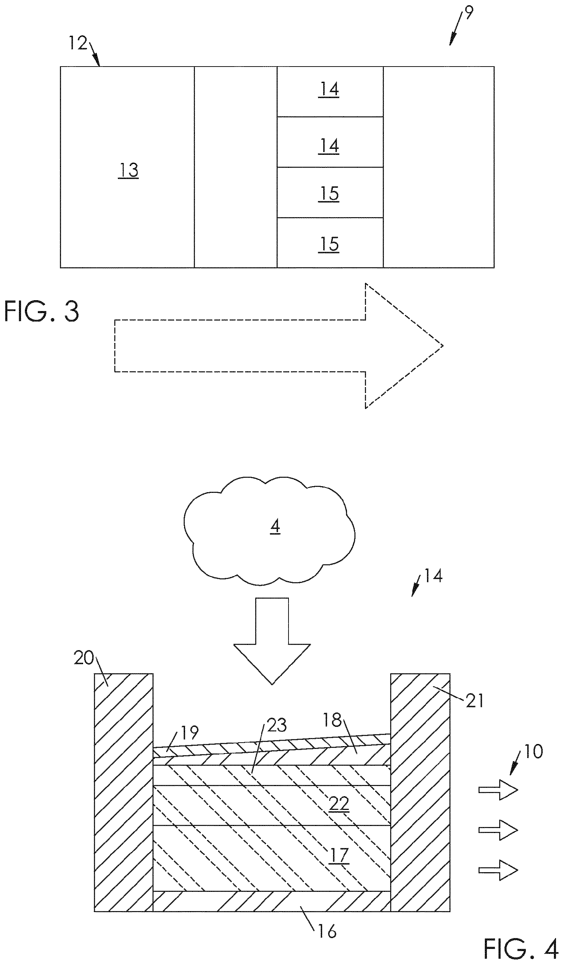

Le capteur 9, représenté en figure 3, comprend un boîtier 12 externe, résistant à la chaleur, dans lequel sont avantageusement logés un système 13 interne de circulation et de refroidissement, et au moins un transistor 14. Avantageusement, le capteur 9 comprend plusieurs transistors 14, 15 aptes à détecter des composants gazeux distincts.

En fonctionnement, le gaz 4 d'échappement pénètre dans le capteur 9 par le système 13 interne dans lequel il circule, puis passe devant les transistors 14, 15 avant de retourner dans la ligne 2 d'échappement pour être rejeté dans l'environnement.

Les transistors 14,15 sont avantageusement de type HEMT (transistors à haute mobilité électronique), et plus particulièrement de type HEMT à base de nitrure d'élément III (GaN, AIN, InN et leurs alliages), et encore plus particulièrement à base d'une hétérostructure d'AlGaN/GaN.

Dans une mise en œuvre, ces transistors 14, 15 sont produits par MOCVD sur un substrat 16. Le substrat 16 peut être un carbure de silicium, ou un oxyde d'aluminium (Al2O3 saphir).

Un alliage ternaire, appelé couche barrière 18, avec une large bande interdite, est placé, par exemple par épitaxie, sur une couche 17, dite couche buffer, dans la terminologie anglaise.

L'épaisseur de la couche barrière 18 est comprise entre 5 et 30nm, et plus particulièrement comprise entre 20 et 30nm. En dessous de 5nm, la densité de gaz 2D d'électrons est négligeable et l'on observe une saturation à partir d'une épaisseur de 25nm.

Selon l'invention, l'épaisseur de la couche barrière 18 n'est pas constante et présente un gradient, l'épaisseur étant avantageusement comprise entre 0 et 21 nm. Cette mise en œuvre permet d'obtenir un signal de sortie linéaire pour le transistor 14, 15.

Dans une mise en œuvre, la couche buffer 17 est de type GaN et l'alliage ternaire de la couche barrière 18 est de type AlxGa1-xN. Avantageusement, x est compris entre 0.15 et 0.4 environ, et vaut plus particulièrement 0.3.

Dans une mise en œuvre, non représentée, une couche de nitrure d'aluminium est placée entre un substrat en saphir et une couche buffer en nitrure de galium.

Le transistor 14, 15 comprend également une grille 19, de type GaN ou NGaN. Son épaisseur est de l'ordre de 2nm. Cette grille augmente le confinement du gaz d'électrons, augmente la hauteur effective de la barrière Schottky, et protège la surface de la couche barrière 18 de l'oxydation.

La grille 19 est recouverte d'une couche fonctionnelle réalisée en matériau présentant une activité catalytique en présence d'un gaz tel qu'hydrogène, monoxyde de carbone, ou oxyde d'azote (NO, NO2). Dans une mise en œuvre, ce matériau est un métal tel que le platine et/ou le palladium.

Dans une mise en œuvre particulière, le film de matériau présentant une activité catalytique en présence d'un gaz est discontinu. Par exemple, le transistor 14 ,15 est pourvu d'un film de platine ou de palladium discontinu, permettant la détection de l'ammoniac, de l'hydrogène, ou de monoxyde et dioxyde d'azote dans le flux de gaz d'échappement, le signal délivré par le capteur 9 étant affecté de manière différente par les concentrations en ces différents gaz.

Un transistor 14, 15 de type HEMT comprend un contact Schottky pour la grille 19 et deux contacts ohmiques pour les électrodes de source 20 et de drain 21.

Dans une mise en œuvre, les contacts ohmiques sur la couche buffer GaN sont assurés par un dépôt d'aluminium, ou par un dépôt d'un empilement de titane et d'aluminium, ou bien encore par un empilement titane/aluminium/métal/or. Le contact ohmique entre AIGaN et GaN est assuré par exemple par gravure.

L'effet de transistor est obtenu en modulant le courant source-drain (et donc la densité du gaz d'électrons) par une tension appliquée à la grille 19.

Une réaction physico-chimique se produit entre les molécules d'un gaz 4 d'échappement et la couche fonctionnelle conduisant à la création d'une couche dipolaire générant une variation de potentiel entre la grille 19 et la surface du semiconducteur sus jacent. Une variation du courant est mesurée en sortie du transistor HEMT, cette variation étant dépendante de la concentration dudit gaz.

Selon l'invention, la deuxième couche 18 barrière présente un gradient d'épaisseur, entre la borne d'entrée (électrode de source 20) et la borne de sortie (électrode de drain 21), pour permettre de linéariser le signal 10 de sortie du transistor 14, 15 et, par suite, du capteur 9.

Suivant le mode de réalisation de la figure 4, chaque transistor 14 comprend, en outre, une troisième couche 22 et une quatrième couche 23 interposées entre la première couche 17 dite « buffer » (tampon en français) et la deuxième couche 18 barrière. A titre d'exemple, le substrat 16 est en saphir, la première couche 17 buffer est en nitrure de gallium (GaN), la deuxième couche 18 barrière est en nitrure de gallium associée à de l'aluminium (AlGaN) et la grille 19 est en nitrure de gallium associée à du bore (BGaN), la troisième couche 22 et à la quatrième couche 23, étant toutes deux en nitrure de gallium (GaN).

Le capteur 9, le transistor 14 et la ligne 2 d'échappement qui viennent d'être décrits offrent plusieurs avantages.

La présence de plusieurs transistors 14, 15 dans le capteur 9, chacun des transistors 14, 15 étant apte à détecter un composant particulier du gaz 4 d'échappement, permet d'analyser plus finement et rapidement la composition du gaz 4 d'échappement et de définir une consigne 11 adaptée d'injection de NH3 dans le SCR 5.

Un seul boîtier 12 permet de loger plusieurs transistors 14, 15. Ainsi, l'intégration d'un capteur 9 dans la ligne 2 d'échappement est simple rapide et peu coûteuse.

L'utilisation d'un transistor de type HEMT permet une sensibilité plus élevée que par emploi d'une diode Schottky.

L'utilisation d'une grille en nitrure de bore et de galium assure une sensibilité améliorée, la concentration de bore pouvant être adaptée à la sensibilité recherchée.

La mise en place d'une couche barrière d'épaisseur variable permet d'obtenir un signal de sortie du capteur qui soit sensiblement linéaire.

Le grand gap, la stabilité thermique et la tension de claquage élevée des semi-conducteurs à base de nitrure assurent une qualité de signal élevé pour le capteur de gaz d'échappement de moteur thermique pour véhicule automobile.

## Revendications

1. Capteur (9) de détection de NO et NO₂ au moins dans un gaz d'une ligne d'échappement d'un moteur thermique, notamment de véhicule automobile, ce capteur (9) comprenant un transistor (14) ayant
- un substrat (16),
- au moins une première couche (17) et une deuxième couche (18) barrière superposées sur le substrat (16),
- une électrode de source (20) et une électrode de drain (21),
- une grille (19) revêtue d'une couche fonctionnelle réalisée en un matériau présentant une activité catalytique avec au moins un composé gazeux, **caractérisé en ce que** la première couche (17), la deuxième couche (18) barrière et la grille (19) sont réalisées à base de nitrure d'éléments III, la grille (19) étant réalisée en un alliage ternaire, et **en ce que** la deuxième couche barrière (18) présente un gradient d'épaisseur entre l'électrode de source (20) et l'électrode de drain (21), pour permettre de linéariser le signal de sortie (10) du transistor (14).

2. Capteur (9) selon la revendication 1, **caractérisé en ce qu'**il est un détecteur d'au moins un des gaz suivants, outre NO et NO₂ : NH₃, CO, CO₂.

3. Capteur (9) selon la revendication 1 ou 2, **caractérisé en ce que** le transistor (14) est un transistor à haute mobilité électronique HEMT.

4. Capteur (9) selon l'une des revendications précédentes, **caractérisé en ce que** la deuxième couche (18) barrière est réalisée à base d'un alliage ternaire AlxGa1-xN, la première couche (17) étant à base de nitrure de gallium.

5. Capteur (9) selon la revendication précédente, **caractérisé en ce que** x est compris entre 0.15 et 0.4.

6. Capteur (9) selon l'une quelconque des revendications précédentes, **caractérisé en ce que** la grille (19) est réalisée à base d'un alliage ternaire ByGa1-yN.

7. Capteur (9) selon l'une des revendications précédentes, **caractérisé en ce que** la deuxième couche barrière (18) a une épaisseur comprise entre 5 et 30 nm, et plus particulièrement entre 20 et 30 nm.

8. Capteur (9) selon l'une des revendications précédentes, **caractérisé en ce que** la couche fonctionnelle est réalisée en platine et/ou en palladium, la couche fonctionnelle étant continue ou discontinue.

9. Capteur (9) selon l'une des revendications précédentes **caractérisé en ce que** le transistor (14) comprend une troisième couche (22) et une quatrième couche (23) toutes deux situées entre la première couche (17) et la deuxième couche (18) barrière, la troisième couche (22) et la quatrième couche (23) étant composée de nitrure de gallium (GaN).

10. Capteur (9) selon l'une des revendications précédentes, **caractérisé en ce qu'**il comprend plusieurs transistors (41,15) aptes à détecter des composants gazeux distincts.

11. Capteur (9) selon l'une des revendications précédentes, **caractérisé en ce qu'**il comprend un boîtier (12) externe dans lequel est logé un système interne (13) de refroidissement.

12. Ligne (2) d'échappement de moteur thermique, notamment de véhicule automobile, comprenant au moins un capteur (9) selon l'une des revendications précédentes.

## Patentansprüche

1. Sensor (9) zum Erfassen von NO und NO₂ zumindest in einem Gas aus einer Abgasleitung einer Wärmekraftmaschine, insbesondere eines Kraftfahrzeugs, wobei dieser Sensor (9) einen Transistor (14) aufweist
- ein Substrat (16),
- mindestens eine erste Schicht (17) und eine zweite Barriereschicht (18), die dem Substrat (16) überlagert sind,
- eine Source-Elektrode (20) und eine Drain-Elektrode (21),
- ein Gitter (19), beschichtet mit einer Funktionsschicht aus einem Material mit katalytischer Aktivität mit mindestens einer gasförmigen Verbindung, **gekennzeichnet dadurch, dass** die erste Schicht (17), die zweite Barriereschicht (18) und das Gitter (19) bestehen aus Nitrid der Elemente III, wobei das Gitter (19) aus einer ternären Legierung besteht und die zweite Barriereschicht (18) einen Dickengradienten zwischen der Source-Elektrode (20) aufweist und die Draine-lektrode (21), um eine Linearisierung des Ausgangssignals des Transistors (14) zu ermöglichen.

2. Sensor (9) nach Anspruch 1, **dadurch gekennzeichnet, dass** er neben NO und NO₂ ein Detektor von mindestens einem der folgenden Gase ist: NH₃, CO, CO₂.

3. Sensor (9) nach Anspruch 1 oder 2, **dadurch gekennzeichnet, dass** der Transistor (14) ein Transistor HEMT mit hoher elektronischer Mobilität ist.

4. Sensor (9) nach einem der vorhergehenden Ansprüche, **dadurch gekennzeichnet, dass** die zweite Barriereschicht (18) aus einer ternären Legierung AlxGa1-xN besteht, wobei die erste Schicht (17) auf Galliumnitrid basiert.

5. Sensor (9) gemäß dem vorhergehenden Anspruch, der **dadurch gekennzeichnet ist, dass** x zwischen 0,15 und 0,4 liegt.

6. Sensor (9) nach einem der vorhergehenden Ansprüche, **dadurch gekennzeichnet, dass** das Gitter (19) aus einer ternären Legierung ByGa1-yN besteht.

7. Sensor (9) nach einem der vorhergehenden Ansprüche, **dadurch gekennzeichnet, dass** die zweite Barriereschicht (18) eine Dicke zwischen 5 und 30 nm und insbesondere zwischen 20 und 30 nm aufweist.

8. Sensor (9) nach einem der vorhergehenden Ansprüche, **dadurch gekennzeichnet, dass** die Funktionsschicht aus Platin und / oder Palladium besteht, wobei die Funktionsschicht kontinuierlich oder diskontinuierlich ist.

9. Sensor (9) nach einem der vorausgegangenen Rechte, nachträglich, nach dem Transistor (14) nach einer dritten Schicht (22) und nach einer zweiten Schicht (23) und nach der zweiten Schicht (18) Bedenken sind Barriere, Rechte die dritte Schicht (22) und die zweite Schicht (23) aus Galliumnitrid (GaN) gehören.

10. Sensor (9) gemäß einem der vorhergehenden Ansprüche, der **dadurch gekennzeichnet ist, dass** er mehrere Transistoren (41, 15) umfasst, die in der Lage sind, separate gasförmige Komponenten zu erfassen.

11. Sensor (9) nach einem der vorhergehenden Ansprüche, **dadurch gekennzeichnet, dass** er ein externes Gehäuse (12) umfasst, in dem ein internes Kühlsystem (13) untergebracht ist.

12. Abgasleitung (2) einer Wärmekraftmaschine, insbesondere eines Kraftfahrzeugs, umfassend mindestens einen Sensor (9) gemäß einem der vorhergehenden Ansprüche.

## Claims

1. Sensor (9) for detecting NO and NO₂ at least in a gas from an exhaust line of a heat engine, in particular of a motor vehicle, this sensor (9) comprising a transistor (14) having
- a substrate (16),
- at least a first layer (17) and a second barrier layer (18) superimposed on the substrate (16),
- a source electrode (20) and a drain electrode (21),
- a grid (19) coated with a functional layer made of a material having a catalytic activity with at least one gaseous compound, **characterized in that** the first layer (17), the second barrier layer (18) and the grid (19) are made from nitride of elements III, the grid (19) being made of a ternary alloy, and **in that** the second barrier layer (18) has a thickness gradient between the source electrode (20) and the drain electrode (21) to allow linearization of the output signal of the transistor (14).

2. Sensor (9) according to claim 1, **characterized in that** it is a detector of at least one of the following gases, in addition to NO and NO₂: NH₃, CO, CO₂.

3. Sensor (9) according to claim 1 or 2, **characterized in that** the transistor (14) is a high electronic mobility transistor HEMT.

4. Sensor (9) according to one of the preceding claims, **characterized in that** the second barrier layer (18) is made from a ternary AlxGa1-xN alloy, the first layer (17) being based on gallium nitride.

5. Sensor (9) according to the preceding claim, **characterized in that** x is between 0.15 and 0.4.

6. Sensor (9) according to any one of the preceding claims, **characterized in that** the grid (19) is made from a ternary alloy ByGa1-yN.

7. Sensor (9) according to one of the preceding claims, **characterized in that** the second barrier layer (18) has a thickness between 5 and 30 nm, and more particularly between 20 and 30 nm.

8. Sensor (9) according to one of the preceding claims, **characterized in that** the functional layer is made of platinum and / or palladium, the functional layer being continuous or discontinuous.

9. Sensor (9) according to one of the preceding claims, **characterized in that** the transistor (14) comprises a third layer (22) and a fourth layer (23) both located between the first layer (17) and the second layer (18) barrier, the third layer (22) and the fourth layer (23) being composed of gallium nitride (GaN).

10. Sensor (9) according to one of the preceding claims, **characterized in that** it comprises several transistors (41, 15) capable of detecting separate gaseous components.

11. Sensor (9) according to one of the preceding claims, **characterized in that** it comprises an external housing (12) in which is housed an internal cooling system (13).

12. Exhaust line (2) of a heat engine, in particular of a motor vehicle, comprising at least one sensor (9) according to one of the preceding claims.
